# EUROPÄISCHE PATENTANMELDUNG

(11) **EP 1 598 098 A1**
(43) Veröffentlichungstag der Anmeldung: **23.11.2005**
(21) Anmeldenummer: 05007601.7
(22) Anmeldetag: 07.04.2005
(51) Int. Cl.: B01D 3/14

(54) **Trennwandkolonne**

(30) Priorität: 19.05.2004 DE 102004024688
(71) Anmelder: BASF Aktiengesellschaft, 67056 Ludwigshafen (DE)
(72) Erfinder: Meenen, Johannes, Dr., 68161 Mannheim (DE); Hölemann, Karl, Dr., 68199 Mannheim (DE); Kaibel, Gerd, Dr., 68623 Lampertheim (DE)

(57) **Zusammenfassung**

Trennwandkolonne (3), enthaltend mindestens zwei Trennwände (5,6), wobei die Trennwände in der Trennwandkolonne so angeordnet sind, dass mindestens zwei der durch die Trennwände ausgebildeten Kolonnenbereiche (1,2) symmetrisch zur Kolonnenachse (4) angeordnet sind.

## Beschreibung

Die vorliegende Erfindung betrifft eine verbesserte Trennwandkolonne, welche mindestens zwei Trennwände enthält.

Trennwandkolonnen sind Destillationskolonnen, die in Teilbereichen eine Längsunterteilung aufweisen. Diese als fest eingeschweißte oder lose eingesteckte Wand ausgeführte Längsunterteilung verhindert in dem betreffenden Teilbereich der Kolonne eine Quervermischung von Flüssigkeits- und Brüdenströmen. Dadurch wird es möglich, aus einer Kolonne mehr als 2 Reinfraktionen zu gewinnen. In den einzelnen Teilbereichen der Kolonne können dabei unterschiedliche Stoffgemische, unterschiedliche Temperaturen und unterschiedliche Drücke vorliegen.

Üblicherweise ist die Trennwand im mittleren Bereich der Kolonne angeordnet. Derartige Trennwandkolonnen weisen einen niedrigeren Energiebedarf auf als konventionelle Anordnungen von mehreren Kolonnen.

In der EP-A 122367 sind Trennwandkolonnen zur destillativen Zerlegung eines Gemisches offenbart. Hierbei wird grundsätzlich auch auf die Möglichkeit hingewiesen, weitere Trenneinrichtungen in die Kolonne zu integrieren.

In der EP-A 126288 wird ein Verfahren zur Durchführung einer chemischen Reaktion und gleichzeitiger destillativer Zerlegung eines Produktgemisches unter Verwendung einer Trennwandkolonne offenbart.

Neben diesen hier im Stand der Technik offenbarten Ausführungsformen einer im mittleren Bereich der Kolonne angeordneten Trennwand gibt es auch Vorrichtungen, bei denen die Trennwand am oberen oder unteren Ende der Kolonne angebracht ist. Diese Ausführung von Trennwandkolonnen entspricht einer Hauptkolonne mit angeschlossener Seitenkolonne, bei der beide Kolonnenkörper kostensparend zu einem einzigen Kolonnenkörper zusammengefasst sind. Diese Art von Vorrichtung ist beispielsweise in der DE-A 10105660 sowie der US-B 6,291,734 offenbart.

Beim laufenden Betrieb solcher handelsüblicher Trennwandkolonnen wurde jedoch eine unerwünschte, seitliche Auslenkung der Kolonnenachse aus der Vertikalen heraus beobachtet. Dies ist darauf zurückzuführen, dass hierbei in den einzelnen, durch die Trennwand ausgebildeten Kolonnenbereichen unterschiedliche Bedingungen hinsichtlich Parametern wie Temperatur bzw. Druck vorliegen. Diese Auslenkung führte zu einer Schrägstellung der horizontal ausgerichteten Kolonneneinbauten, wie Böden, Flüssigkeitsverteiler oder Packungen. Bei einer Schrägstellung von Trennböden wird die angestrebte gleichmäßige Durchströmung der Flüssigkeit mit Brüden verhindert, was die Stofftrennung beeinträchtigt. Auch Füllkörper- bzw. Packungskolonnen sind auf eine exakte vertikale bzw. horizontale Ausrichtung der Einbauten angewiesen, da eine Schrägstellung zu einer ungleichen Flüssigkeitsaufgabe durch die Verteiler bzw. teilweisen Randgängigkeit der Flüssigkeit und Ungleichverteilung führt, wodurch die Trennwirksamkeit weiter verschlechtert wird. Besonders ausgeprägt ist diese Schrägstellung bei unterschiedlichen Temperaturen in den Kolonnenbereichen. Hier dehnt sich der wärmere Teil der Kolonne stärker aus als der kältere Teil. Bereits bei relativ niedrigen Differenzen der mittleren Temperatur in den Kolonnenbereichen von 2 bis 5°C wurde bereits eine spürbare Schrägstellung festgestellt, welche die Trennleistung herabsetzte. Unter der mittleren Temperatur eines Kolonnenbereichs wird hierbei die über die Höhe dieses Bereichs (also der Höhe der Trennwand) gemittelte Temperatur verstanden. Das Ausmaß der jeweiligen Schrägstellung hängt stark von den konkreten Bedingungen ab: Neben den von der konkreten Trennaufgabe vorgegebenen Rahmenbedingungen spielt u.a. auch die Höhe der Kolonne hier eine Rolle. Auch die Länge einer Zone, über welche sich die Temperaturdifferenz bezüglich der mittleren Temperatur zwischen zwei Kolonnenbereichen ausbildet, hat einen Einfluss auf die Schrägstellung. Für den Fall, dass sich eine solche Zone mit einer Temperaturdifferenz von mindestens 2 bis 5°C über eine Zone von mindestens der Hälfte des Kolonnendurchmessers erstreckt, ergibt sich eine spürbare Schrägstellung, welche die Kolonne in ihrer Trennleistung verschlechtert.

Die unterschiedlichen Wärmedehnungen benachbarter, abgetrennter Kolonnenbereiche müssen in der Nähe der Trennwand durch mechanische Dehnungen kompensiert werden. Daher werden die Kolonnenwände in der Nähe zur Trennwand durch die Temperaturdifferenz jedoch hoch beansprucht. Bei eingeschweißten Trennwänden wird die Druckdifferenz zwischen den beiden Seiten der Trennwand zum Teil als Biegemoment abgetragen und über die Schweißnaht in die Kolonnenwand eingeleitet. An dieser Stelle werden daher zusätzliche Biegebeanspruchungen in der Kolonnenwand erzeugt. Bei lose eingesteckten Trennwänden werden keine Biegebeanspruchungen in die Kolonnenwand eingeleitet. Allerdings wird die Trennwand im Vergleich höher beansprucht und stärker verformt. Besonders kritisch sind Anwendungsfälle mit Temperaturunterschieden zwischen zwei Kolonnenbereichen hinsichtlich der mittleren Temperatur von mehr als 5 bis 50°C, wobei sich insbesondere bei hohen Temperaturdifferenzen
- also über etwa 50°C die Probleme weiter verschärfen. Auch die Druckdifferenz zwischen zwei Bereichen spielt hier eine Rolle, insbesondere bei einer mittleren Druckdifferenz von mehr als 50 mbar ergibt sich hier eine Verschlechterung. Auch hier nehmen die Nachteile mit steigender Druckdifferenz zu. Zur Vermeidung von Spalten und zur Erzielung einer ausreichenden Festigkeit sollten die Schweißnähte durchgeschweißt oder bei Verwendung von Kehlnähten beidseitig geschweißt sein.

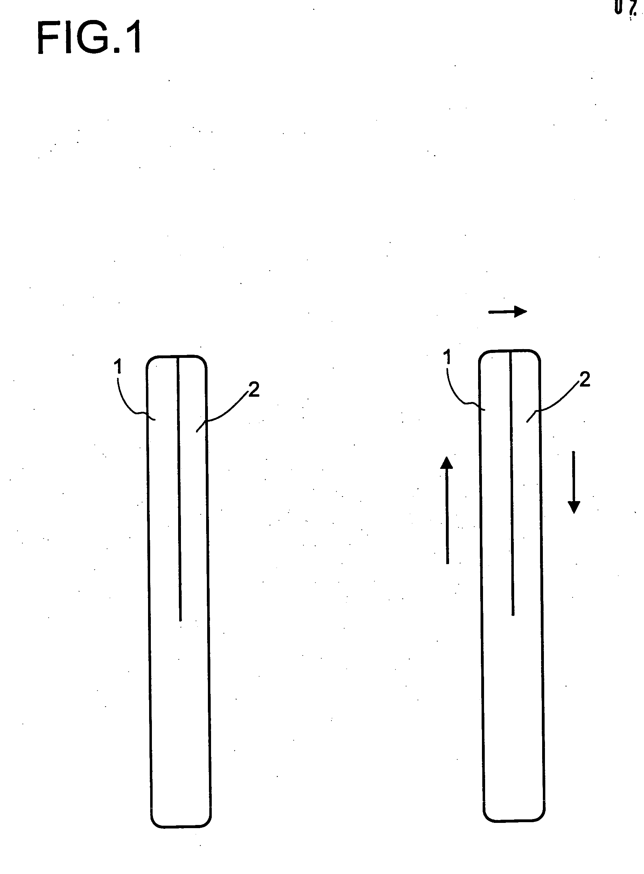

Die Tendenz einer Schrägstellung der Kolonnenachse aufgrund einer Temperaturdifferenz zwischen den Kolonnenbereichen ist in Figur 1 dargestellt. Die Trennwand ist am oberen Ende der Kolonne angeordnet und der Teilbereich 1 weist eine höhere Temperatur auf als der Teilbereich 2. Die Pfeile symbolisieren die aus der Erwärmung resultierende Ausdehnung: Teilbereich 1 dehnt sich stärker aus (der Pfeil ist länger) als Teilbereich 2 und dies führt zu der Schrägstellung, welche durch den oberen, horizontal verlaufenden Pfeil angedeutet wird. Höhere Betriebsdrücke können sowohl im Teilbereich 1 als auch im Teilbereich 2 auftreten.

Es stelle sich somit die Aufgabe, eine verbesserte Trennwandkolonne zu finden, welche den genannten Nachteilen abhilft. Insbesondere im Fall von Temperaturdifferenzen zwischen den Kolonnenbereichen soll eine Auslenkung der Kolonnenachse aus der Vertikalen, welche die Trennleistung der Kolonne spürbar verschlechtert, vermieden werden.

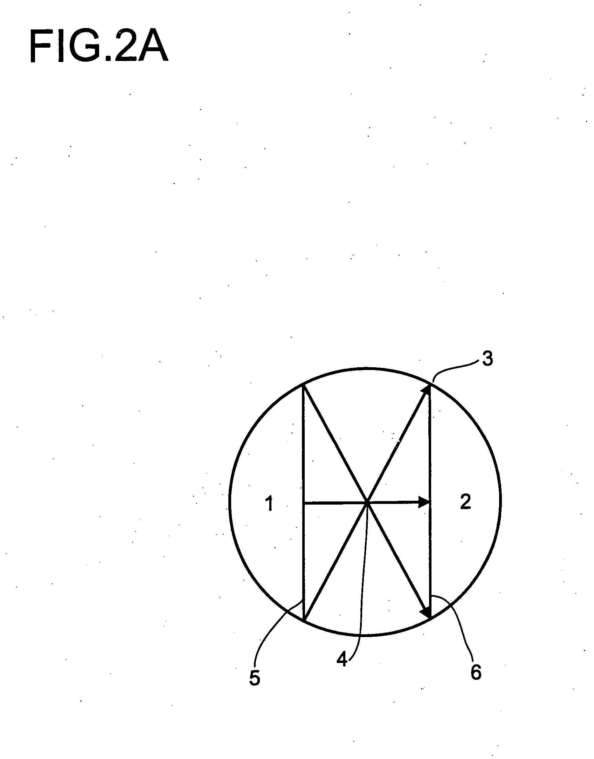

Demgemäß wurde eine Trennwandkolonne enthaltend mindestens zwei Trennwände gefunden, welche dadurch gekennzeichnet ist, dass die Trennwände in der Trennwandkolonne so angeordnet sind, dass mindestens zwei der durch die Trennwände ausgebildeten Kolonnenbereiche symmetrisch zur Kolonnenachse angeordnet sind. Unter symmetrischer Anordnung bezogen auf die Kolonnenachse wird hierbei genauer gesagt eine Punktsymmetrie in der jeweiligen Kolonnenebene bezogen auf den Kolonnenmittelpunkt in dieser Ebene (Durchgangspunkt, durch den die Kolonnenachse verläuft) verstanden. Dies ist in Figur 2a erläutert. Es ist hier eine Draufsicht der Kolonne mit ihrem Außenmantel (3) und dem Mittelpunkt (4) zu sehen, durch welchen die vertikale Kolonnenachse verläuft. Die Linie der linken Trennwand (5) wird am Kolonnenmittelpunkt (Kreismittelpunkt) (4) gespiegelt und es bildet sich so die Linie (6) der rechten Trennwand aus. Die Flächen (1) bzw. (2), welche von dem jeweiligen Segment des Kolonnenaußenmantels und der Linie (5) bzw. (6) gebildet werden, sind gleich groß und erfindungsgemäß symmetrisch angeordnet. Diese für eine Ebene beispielhaft erläuterte Spiegelung führt über die relevante Kolonnenhöhe (Höhe der Trennwände) durchgeführt zu der erfindungsgemäßen Anordnung der Trennwände.

Die durch die erfindungsgemäße Anordnung geschaffenen, symmetrischen Kolonnenbereiche bewirken vorteilhafterweise eine Kompensation einer eventuell auftretenden Tendenz der Auslenkung der Kolonnenachse aus der Vertikalen. Die bezogen auf die Kolonnenachse symmetrische Anordnung dieser Bereiche bewirkt, dass sich eventuell auftretende Dehnungen bzw. Spannungen in den Bereichen gegenseitig aufheben.

Bevorzugt ist die Vorrichtung so zu konzipieren, dass in den symmetrischen Kolonnenbereichen beim Betrieb der Trennwandkolonne die gleichen Temperaturen vorliegen. Hierdurch ist es möglich, die Kolonne unabhängig von den jeweils vorliegenden zu trennenden Stoffgemischen und Betriebsbedingungen in exakter vertikaler und horizontaler Ausrichtung zu halten. Es empfiehlt sich besonders, diese Temperaturbereiche jeweils in der gleichen Kolonnenhöhe anzuordnen. Dies kann dadurch realisiert werden, dass man die beiden symmetrischen Kolonnenbereiche entsprechend symmetrisch mit Zuläufen, Seitenabzügen etc. versieht. Indem die für die jeweilige Trennaufgabe erforderlichen Zuläufe bzw. Abläufe ebenfalls symmetrisch angeordnet sind, können gleiche Verhältnisse - und somit auch gleiche Temperaturen - in den symmetrischen Teilbereichen geschaffen werden. Wie das im konkreten Einzelfall zu realisieren ist, hängt von der jeweiligen Trennaufgabe (eingesetztes Gemisch, Kolonnenaufbau, gewünschte Reinheiten, etc.) ab und kann vom Fachmann durch Routineversuche ermittelt werden.

Die zusätzliche Trennwand bzw. Trennwände können bei der erfindungsgemäßen Vorrichtung bevorzugt so angeordnet werden, dass sie gegenseitig versteifend wirken. Dadurch sind höhere Druckdifferenzen von etwa 0,1. bis .0,5 bar zwischen den einzelnen Teilbereichen möglich. Eine weitere Versteifung lässt sich durch die Verwendung von Wellblech für die Trennwände oder durch das Einpressen von Sicken oder Wellen in Querrichtung in die Trennwände erzielen. Unter Sicken versteht man eine Verfahrensvariante des Biegeumformens, bei der rillenförmige Vertiefungen in Werkstücke aus Blech eingebracht werden, sie sind beispielsweise in Schwarz, Dominik Auslegung von Blechen mit Sicken (Sickenatlas) / Verf.: Dominik Schwarz. - Frankfurt/M. : Forschungsvereinigung Automobiltechnik e.V. (FAT), 2002. - (FAT-Schriftenreihe ; 168) beschrieben.

Die erfindungsgemäße Vorrichtung kann sowohl mit Trennwänden am oberen oder unteren Ende der Kolonne als auch im mittleren Bereich der Kolonne versehen sein. Die entsprechende Anordnung wird von der jeweiligen, konkreten Trennaufgabe beeinflusst.

Im folgenden wird die erfindungsgemäße Vorrichtung anhand der Figuren exemplarisch näher beschrieben.

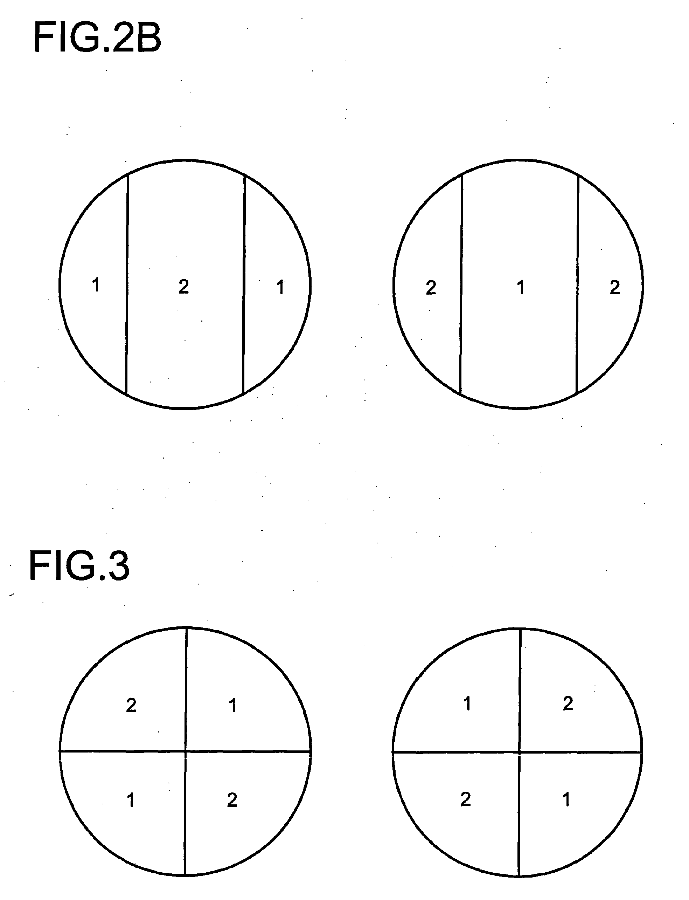

Figur 2b zeigt ein Beispiel, bei dem 2 Trennwände parallel angeordnet sind. Entweder der Teilbereich 1 mit der höheren Temperatur oder der Teilbereich 2 mit der niedrigeren Temperatur sind erfindungsgemäß symmetrisch geteilt ausgeführt. Die Teilflächen der unterteilten Teilbereiche sind bevorzugt gleich groß. Die Gesamtquerschnittsfläche der Teilbereiche mit der höheren Temperatur kann sich von der Gesamtquerschnittsfläche mit der niedrigeren Temperatur unterscheiden.

Fig. 3 zeigt ein Beispiel, bei dem sowohl der Teilbereich 1 mit der höheren Temperatur als auch der Teilbereich 2 mit der niedrigeren Temperatur geteilt ausgeführt sind. Die einzelnen Trennwände sind in diesem Beispiel senkrecht aufeinander stehend gezeichnet, können jedoch auch in einem hiervon abweichenden Winkel angeordnet sein.

Letztere Maßnahme ist anzuwenden, wenn sich die Gesamtquerschnittsfläche der Teilbereiche mit der höheren Temperatur von der Gesamtquerschnittsfläche mit der niedrigeren Temperatur unterscheidet. Es empfehlen sich hierbei Winkel von etwa .30 bis 60° bezogen auf .den Kolonnenmittelpunkt. Durch diese Anordnung der Trennwände wird außerdem eine Versteifung der Trennwände erzielt, die eine höhere Druckdifferenz über den Trennwänden ermöglicht.

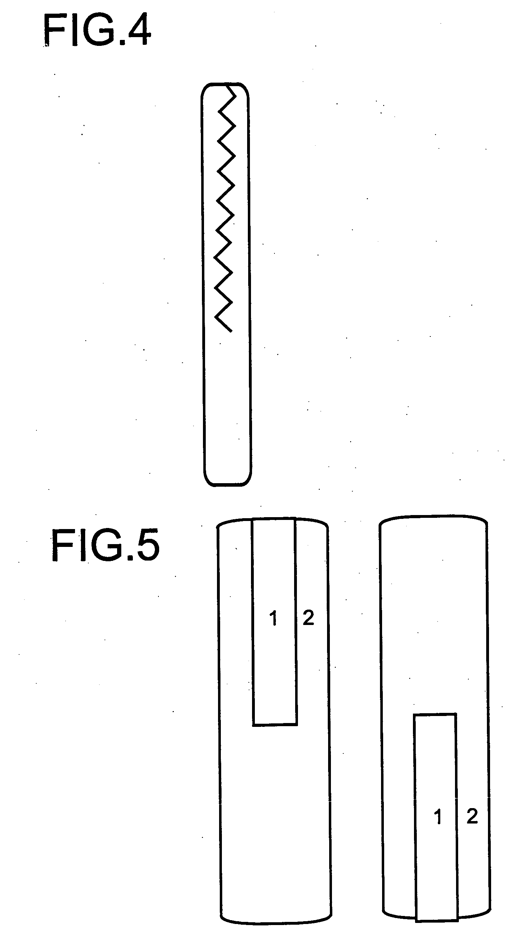

Fig. 4 zeigt eine Trennwandkolonne, bei der die Trennwand durch die Verwendung von Wellblech oder das Einpressen von Sicken oder Wellen versteift worden ist, wodurch höhere Druckdifferenzen möglich werden. Diese Maßnahmen können mit den anderen Maßnahmen kombiniert werden.

Weiterhin wurde ein Verfahren zur destillativen Auftrennung eines Gemisches mit einer Trennwandkolonne enthaltend mindestens zwei Trennwände gefunden, welches dadurch gekennzeichnet ist, dass man zumindest zwei der durch die Trennwände geschaffenen Kolonnenbereiche für die gleiche Trennaufgabe mit zumindest ähnlichen, verfahrenstechnischen Parametern betreibt. Dadurch, dass innerhalb der Trennwandkolonne bei diesen Bereichen zumindest annähernd gleiche Verhältnisse hinsichtlich den Parametern wie Temperatur bzw. Druck vorliegen, kann der unerwünschten Auslenkung der Kolonnenachse aus der Vertikalen begegnet werden. Bevorzugt betreibt man die Kolonnenbereiche unter identischen Bedingungen.

In einer bevorzugten Ausführungsform werden auch bei dem erfindungsgemäßen Verfahren die Kolonnenbereiche symmetrisch angeordnet - hierbei wird auf die vorstehenden Erläuterungen dazu verwiesen. Wie bereits aufgeführt, kann es für die gewünschte Symmetrie entsprechend erforderlich sein, die entsprechenden Bereiche auch in ihrer Peripherie gleich mit Anschlüssen wie Zuläufen, Entnahmen, Seitenabzügen etc. zu versehen.

Das erfindungsgemäße Verfahren eignet sich besonders gut zur Auftrennung von Produkten mit hohen Siedepunktsunterschieden. Der Tendenz zur Auslenkung aus der vertikalen Kolonnenachse aufgrund der hierbei auftretenden Temperaturunterschiede zwischen den von den durch die Trennwände geschaffenen Kolonnenbereichen wird durch die symmetrische Anordnung von mindestens zwei Bereichen begegnet. Besonders eignet sich das erfindungsgemäße Verfahren für Trennaufgaben, bei welchen die mittlere Temperaturdifferenz zwischen den symmetrisch angeordneten und bei gleicher Temperatur betriebenen Kolonnenbereichen einerseits und dem bzw. den anderen (ggf. ebenfalls ihrerseits symmetrisch angeordneten) Kolonnenbereichen andererseits 4 bis 150°C, bevorzugt 5 bis 100°C, besonders bevorzugt 10 bis 50°C beträgt. Natürlich eignet sich das Verfahren jedoch auch gut für Anwendungsfälle, bei welchen noch höhere Temperaturdifferenzen auftreten.

Alternativ wurde gefunden, dass anstelle der oben beschriebenen Trennwände eine zylindrische Trennwand in der Kolonne angebracht werden kann, wobei das Verhältnis des Innendurchmessers der Trennwandkolonne zum Innendurchmesser der zylindrischen Trennwand 1,2 bis 6 beträgt. Eine derartige Anordnung kann vorteilhafterweise höhere Differenzdrücke aufnehmen. Außerdem werden Temperaturunterschiede in der Kolonnenwand vollständig vermieden, so dass es weder zu einer Auslenkung der Kolonne noch zu einer erhöhten mechanischen Beanspruchung der Wand kommt. Diese Anordnung bietet sich an, wenn in den einzelnen Teilbereichen Temperaturdifferenzen über ca. 50°C und Druckdifferenzen über ca. 50 mbar vorliegen.

Fig.5 zeigt eine Trennwandkolonne, bei der anstelle der quer in der Kolonne angeordneten Trennwand eine zylindrische Trennwand mittig angeordnet wird, so dass ein innerer und ein äußerer Teilbereich entsteht. Diese Trennwand kann auf dem unteren Boden aufgestellt, mit dem unteren oder dem oberen Boden verschweißt oder verschraubt werden oder mit Hilfe einer Stützkonstruktion im mittleren Bereich der Kolonne angeordnet werden.

Das erfindungsgemäße Verfahren eignet sich besonders für die Auftrennung von Produkten mit relativ hohen Siedepunktsunterschieden. Diese liegen in etwa vor, wenn die Differenz der Siedepunkte 5 bis 150°C, bevorzugt etwa 10 bis 50°C beträgt.

Für folgende Verfahren ist die erfindungsmäßige Vorrichtung sehr gut geeignet, um Gemische aufzutrennen:
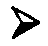 Ammoniakherstellung
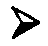 Aminproduktion
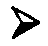 Cracken von Kohlenwasserstoffen
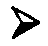 Dampfreformierung
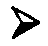 Oligomerisierung oder Dimerisierung von Kohlenwasserstoffen
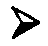 Verfahren zur Herstellung von Epoxiden
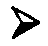 Butadien-Extraktion
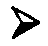 Alkylierungen
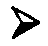 Methatese
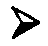 Herstellung von Alkoholen, Aldehyden bzw. Ketonen

Die erfindungsgemäße Vorrichtung bzw. das erfindungsgemäße Verfahren ermöglichen eine verfahrenstechnisch einfache und wirtschaftliche Verbesserung der Trennleistung. Die Verbesserung ist einfach und kostengünstig zu realisieren. Besonders vorteilhaft erweist sie sich bei der destillativen Aufarbeitung von Produkten mit relativ hohen Siedepunktsunterschieden sowie bei spürbaren Druckunterschieden in der Kolonne.

### Beispiel

Bei der destillativen Aufreinigung von primären und sekundären Aminen ergibt sich im Sumpf einer Trennwandkolonne eine Temperaturdifferenz von bis zu 100 K. Die Trennwand mit einer Höhe von 40 m ist dabei im unteren Bereich der Kolonne angeordnet und mit dem Mantel und dem unteren Klöpperboden fest verschweißt. Für die Wanddicke des Klöpperbodens und der Trennwand wurde 15 mm bzw. 25 mm festgelegt. Die Wanddicke des Mantels beträgt 15 mm.

**Tabelle:**

| Auslegungsdaten der Kolonne | |
|---|---|
| Höhe der Kolonne | 64 m |
| Außendurchmesser | 1,9 m |
| Länge der Unterteilung | 40 m |
| Betriebsdruck | 10 bar |
| Betriebstemperatur | 200°C |
| Differenzdruck zwischen den Teilbereichen | 0,3 bar |

Die Auswertung der Spannungen erfolgt nach AD-Merkblatt S4. Maßgeblich für die Bildung von plastischen Verformungen ist die Vergleichsspannung nach von Mises, die auf Werte von 137 N/mm² (globale Membranbeanspruchungen) bzw. 205 N/mm² (lokale Membranbeanspruchungen und Biegebeanspruchungen) begrenzt werden muss. Thermisch bedingte Spannungen werden als sekundäre Spannungen eingestuft, weil sie durch Zwängungen infolge unterschiedlicher Wärmedehnung entstehen und im Betrieb durch begrenzte plastische Verformungen abgebaut werden. Da die Kolonne nicht wechselnd beansprucht wird, dürfen die thermisch bedingten Spannungen 410 N/mm² nicht überschreiten.

### Ergebnis

In einem schmalen Übergangsbereich in der Nähe der Trennwand bilden sich Längsspannungen, die im kälteren Teil der Kolonne bis zu 130 N/mm² (Zugbeanspruchung) und im wärmeren Teil der Kolonne bis zu -130 N/mm² (Druckbeanspruchung) betragen. Die höchste thermische Vergleichsspannung beträgt 360 N/mm² und liegt an der Außenseite im Übergangsbereich zwischen dem wärmeren Kolonnenteil und der kalten Standzarge vor. Die höchste Membranbeanspruchung durch Innendruck beträgt 140 N/mm². Die Beanspruchungen der Kolonne durch Temperatur und Innendruck sind nach AD-Merkblatt S4 zulässig.

Die Kolonnenspitze bewegt sich aufgrund der Temperaturverteilung um ca. 1300 mm zur Seite. Die Temperaturdehnungen beeinträchtigen daher die Standsicherheit der Kolonne und führen zu verfahrenstechnischen Problemen aufgrund einer erheblich verschlechterten Trennleistung, weil die Kolonnenböden nicht waagerecht ausgerichtet bleiben.

Durch den erfindungsgemäßen Einbau zwei sich kreuzenden symmetrischen Trennwänden neigt sich die Kolonne aufgrund der symmetrischen Temperaturverteilung praktisch nicht zu Seite, sondern dehnt sich lediglich aufgrund der Temperaturunterschiede um mehrere Millimeter im heißen Bereich aus.

## Patentansprüche

1. Trennwandkolonne, enthaltend mindestens zwei Trennwände, **dadurch gekennzeichnet, dass** die Trennwände in der Trennwandkolonne so angeordnet sind, dass mindestens zwei der durch die Trennwände ausgebildeten Kolonnenbereiche symmetrisch zur Kolonnenachse angeordnet sind.

2. Trennwandkolonne nach Anspruch 1, **dadurch gekennzeichnet, dass** die Flüssigkeits- und Brüdenströme in der Trennwandkolonne so gelenkt werden, dass die Kolonnenbereiche, welche symmetrisch zur Kolonnenachse angeordnet sind, die gleiche, mittlere Temperatur aufweisen.

3. Trennwandkolonne nach Anspruch 1 oder 2, **dadurch gekennzeichnet, dass** die Trennwände parallel zueinander angeordnet und symmetrisch zur Kolonnenachse angebracht sind.

4. Trennwandkolonne nach Anspruch 1 oder 2, **dadurch gekennzeichnet, dass** die Trennwände nicht parallel ausgeführt sind, sondern untereinander einen Winkel von bevorzugt 30 bis 60° bilden und sich im Inneren der Kolonne berühren.

5. Trennwandkolonne nach Anspruch 1, 2 oder 3, **dadurch gekennzeichnet, dass** die Trennwände so angeordnet sind, dass sie sich gegenseitig versteifen, wodurch die zulässige Druckdifferenz zwischen den einzelnen Kolonnenbereichen erhöht wird.

6. Trennwandkolonne nach den Ansprüchen 1 bis 5, **dadurch gekennzeichnet, dass** die Trennwände durch die Verwendung von Wellblech oder das Einpressen von Sicken in Querrichtung versteift werden, wodurch sich eine höhere zulässige Druckdifferenz über der Trennwand ergibt.

7. Verfahren zur destillativen Auftrennung eines Gemisches mit einer Trennwandkolonne enthaltend mindestens zwei Trennwände, **dadurch gekennzeichnet, dass** man zumindest zwei der durch die Trennwände geschaffenen Kolonnenbereiche für die gleiche Trennaufgabe mit zumindest ähnlichen, verfahrenstechnischen Parametern betreibt.

8. Verfahren nach Anspruch 7 **dadurch gekennzeichnet, dass** zumindest zwei der Kolonnenbereiche symmetrisch in der Kolonne angeordnet und in gleicher Weise betrieben werden.

9. Trennwandkolonne zur destillativen Zerlegung eines Gemisches, **dadurch gekennzeichnet, dass** die Kolonne mit einer mittig angeordneten, zylindrischen Trennwand ausgerüstet wird, wobei das Verhältnis des Innendurchmessers der Trennwandkolonne zum Innendurchmesser der zylindrischen Trennwand 1,2 bis 6 beträgt.
